(19) Europäisches Patentamt
European Patent Office
Office européen des brevets

(11) EP 4 638 382 B1

(12) EUROPEAN PATENT SPECIFICATION

(45) Date of publication and mention of the grant of the patent:
**04.02.2026 Bulletin 2026/06**

(21) Application number: **24754718.5**

(22) Date of filing: **09.08.2024**

(51) International Patent Classification (IPC):
***C04B 24/26*** *(2006.01)* ***C09K 8/44*** *(2006.01)*
***C09K 8/508*** *(2006.01)* ***D21H 17/37*** *(2006.01)*
***C08F 220/56*** *(2006.01)* ***C08F 2/00*** *(2006.01)*
***C09K 8/035*** *(2006.01)* ***C08F 220/06*** *(2006.01)*
***D21H 21/14*** *(2006.01)* ***C11D 3/14*** *(2006.01)*
***C09K 8/467*** *(2006.01)* ***C09K 8/88*** *(2006.01)*
***C08G 69/00*** *(2006.01)* ***C02F 1/56*** *(2023.01)*
***C04B 103/00*** *(2006.01)* ***C04B 103/32*** *(2006.01)*
***C04B 103/40*** *(2006.01)* ***C04B 103/44*** *(2006.01)*
***C11D 3/37*** *(2006.01)*

(52) Cooperative Patent Classification (CPC):
**C08F 220/56; C04B 24/2641; C04B 24/2652; C08F 220/06; C09K 8/035; C09K 8/44; C09K 8/467; C09K 8/88; D21H 17/37; D21H 21/14;** C02F 1/56; C04B 2103/008; C04B 2103/32; C04B 2103/408; C04B 2103/44; (Cont.)

(86) International application number:
**PCT/EP2024/072658**

(87) International publication number:
**WO 2025/032253 (13.02.2025 Gazette 2025/07)**

# (54) POLYMERIZATION METHOD FOR OBTAINING POLYMERS WITH IMPROVED DEGRADABILITY

POLYMERISATIONSVERFAHREN ZUR HERSTELLUNG VON POLYMEREN MIT VERBESSERTER ABBAUBARKEIT

MÉTHODE DE POLYMÉRISATION POUR L’OBTENTION DE POLYMÈRES À DÉGRADABILITÉ AMÉLIORÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.08.2023 FR 2308607**

(43) Date of publication of application:
**29.10.2025 Bulletin 2025/44**

(73) Proprietors:
- **SNF Group**
  **42160 Andrézieux-Bouthéon (FR)**
- **Centre National de la Recherche Scientifique**
  **75794 Paris Cedex 16 (FR)**
- **Université Paris-Saclay**
  **91190 Gif-sur-Yvette (FR)**

(72) Inventors:
- **FAVERO, Cédrick**
  **42160 ANDREZIEUX BOUTHEON (FR)**
- **BRAUN, Olivier**
  **42160 ANDREZIEUX BOUTHEON (FR)**
- **NICOLAS, Julien**
  **75794 PARIS CEDEX 16 (FR)**
- **LE, Dao**
  **75794 PARIS CEDEX 16 (FR)**

(74) Representative: **Ipsilon**
**Le Contemporain**
**50 Chemin de la Bruyère**
**69574 Dardilly Cedex (FR)**

(56) References cited:
**WO-A1-2023/078534 DE-A1- 102022 200 882**
**JP-A- 2000 038 595**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **LENA JEAN-BAPTISTE ET AL: "Degradable Poly(alkyl acrylates) with Uniform Insertion of Ester Bonds, Comparing Batch and Semibatch Copolymerizations", MACROMOLECULES, vol. 53, no. 10, 12 May 2020 (2020-05-12), US, pages 3994 - 4011, XP093132346, ISSN: 0024-9297, DOI: 10.1021/acs.macromol.0c00207**
- **PLUMMER CHRISTOPHER M. ET AL: "Mechanistic Investigation of [epsilon]-Thiono-Caprolactone Radical Polymerization: An Interesting Tool to Insert Weak Bonds into Poly(vinyl esters)", ACS APPLIED POLYMER MATERIALS, vol. 3, no. 6, 2 June 2021 (2021-06-02), pages 3264 - 3271, XP055924940, ISSN: 2637-6105, DOI: 10.1021/acsapm.1c00569**
- **BINGHAM NATHANIEL M. ET AL: "Thioester-Functional Polyacrylamides: Rapid Selective Backbone Degradation Triggers Solubility Switch Based on Aqueous Lower Critical Solution Temperature/Upper Critical Solution Temperature", vol. 2, no. 8, 14 August 2020 (2020-08-14), pages 3440 - 3449, XP055868414, ISSN: 2637-6105, Retrieved from the Internet <URL:https://pubs.acs.org/doi/pdf/10.1021/acsapm.0c00503> [retrieved on 20240215], DOI: 10.1021/acsapm.0c00503**


(52) Cooperative Patent Classification (CPC): (Cont.)
C09K 2208/12; C09K 2208/28; C11D 3/3719

## Description

### TECHNICAL FIELD OF THE INVENTION

The present invention relates to a method for the preparation of a polymer with improved degradability, said polymer and to the use thereof.

### PRIOR ART

Polyacrylamides (PAM) are water-soluble synthetic polymers with a wide range of applications such as wastewater treatment, paper making, cosmetics, textiles, agriculture, construction, oil recovery or mining.

Due to their polymeric nature, i.e. their high molecular weight, polyacrylamides are considered inert and non-toxic, both for the environment and for humans, with a low risk of bioaccumulation in plants. However, the regulation of chemicals and the monitoring of their possible evolution in nature apply to these compounds. Thus, the specifications to be complied with are increasingly restrictive for manufacturers and vary according to applications and countries. The degradation of these polymers in the environment and their metabolization by microorganisms therefore remains a major research topic in order to meet the ecological challenges of our time.

WO 2023/078534 discloses a biodegradable polymer.

DE 10 2022 200882 describes the preparation of polymers of cyclic ketene acetal and acrylic and/or vinyl monomers and their use in laundry care.

Lena et al. (Macromolecules, vol. 53, no. 10, May 12 2020, pages 3994-4011) have disclose biodegradable poly(alkyl acrylates).

JP 2000 038595 relates to polymers of cyclic ketene acetal and carboxylic acid monomers, and their use in detergents.

Plummer et al. (ACS Applied Polymer Materials, vol. 3, no. 6, June 2 2021, pages 3264-3271) teach preparing polymers by polymerizing ε-thionocaprolactone or ε-thionodecalactone.

Bingham et al. (ACS Applied Polymer Materials, vol. 2, no. 8, August 14 2020, pages 3440-3449) have disclosed polymers of acrylamide and thionolactone dibenzo[c,e]oxepane-5-thione.

There are several ways to degrade PAM, divided into two processes: abiotic degradations and biotic degradations, also called biodegradation.

Abiotic transformations include, among others, mechanical, chemical and photochemical degradations that can be forced or occur automatically in nature. They make it possible to reduce the molecular weight of the polymer by breaking the chains into increasingly smaller fragments until oligomers are obtained (polymers of very small sizes having a number of repeating units not exceeding a few dozen).

Biotic transformations include biological processes, i.e. the digestion of oligomers by microorganisms such as fungi, bacteria or even enzymes. At the end of this biodegradation, the polymer was completely degraded and metabolized.

The prior degradation of polymers is essential to initiate biodegradation. It is indeed necessary that the polymer or oligomer fragment can cross the cell barrier in order to be metabolized. This is applicable to all polymers and it has been shown that the rapid metabolization of PAM, as is the case in standardised tests, is only possible for a degree of polymerisation of less than 7 (heptamer).

Abiotic transformations can be accelerated by manufacturers, but the various existing treatments (mechanical or chemical) involve additional steps leading to logistics going in the opposite direction of ecological issues with, in particular, equipment, the use of products, energy consumption and higher costs.

Other solutions are known to improve the degradation rate, in particular the incorporation into the polymer chain of so-called "weak points" corresponding to the inclusion of particular chemical functions leading to the fragmentation of the main hydrocarbon chain of the polymer. This fragmentation reaction can be carried out rapidly under relatively soft conditions similar to those encountered in nature.

The incorporation of the weak point can be achieved by adding an additional monomer inducing a hydrolysable function, for example a cyclic ketene acetal. The polymerization of a cyclic ketene acetal is carried out by radical ring opening polymerization (rROP), thus making it possible to integrate an ester function into the structure of the polymer, a function which is easily hydrolyzable.

The main problem for these polymers remains the way in which the weak points are distributed along the chain. This aspect is fundamental since it will govern the molar mass and the mass dispersity of the fragments obtained after degradation. A significant dispersion will induce heterogeneous fragments, of all sizes, the largest of which will not allow the cell barrier of microorganisms to be biodegraded.

There is therefore a need to control the distribution of the points of fragility (weak points) on the main chain of the polymer, which is reflected in the case of monomers inducing hydrolyzable functions, by a homogeneous incorporation of

these monomers during the polymerization.

The Applicant has discovered a novel polymerization method which makes it possible to obtain PAM derivatives which have improved degradation while retaining good application properties.

The polymerization method, the resulting polymers and their utilisation are in line with the respect of the environment and the limitation of the pollution. The better degradability of the polymer reduces the environmental impact of the applications using it.

## SUMMARY OF THE INVENTION

The present invention relates to a method for the preparation of a polymer by radical polymerization of specific monomers, in particular a cyclic monomer. The various monomers are progressively poured ("progressively poured" or, in French, "coulée").

More specifically, it is a method for the preparation of a polymer by radical polymerization of at least three monomers A, $B_1$ and $B_2$:

- monomer A chosen from: (meth)acrylamide, (meth)acrylamide derivatives, (meth)acrylic acid, (meth)acrylic acid derivatives and mixtures thereof;
- monomer $B_1$ being a cyclic ketene acetal; and
- monomer $B_2$ being a thionolactone;

in which at least one of monomers $B_1$ and $B_2$ is progressively poured during the radical polymerization.

Due to the combination of the polymerization technique (introduction of the monomers by progressive pouring) and the nature of the monomers (specific cyclic monomer), this method makes it possible to improve the degradability properties of the polymer. The improved polymer degradability results from better distribution of hydrolysable monomers. This method eliminates differences in polymerization kinetics between monomers.

The present invention further relates to the polymer obtained according to this method.

The present invention also relates to the use of this polymer in: hydrocarbon recovery (oil or gas); drilling or cementing wells; stimulation of hydrocarbon wells (oil or gas), for example hydraulic fracturing; conformance; diversion; open, closed or semi-closed circuit water treatment; treatment of fermentation broth; sludge treatment; construction; paper or cardboard manufacture; batteries; wood treatment; treatment of hydraulic composition (concrete, cement, mortar and aggregates); mining; formulation of cosmetic products; formulation of detergents; textile manufacture; geothermal energy; manufacture of diapers; or agriculture.

Finally, the present invention also relates to the use of this polymer as a flocculant, coagulant, binding agent, fixing agent, viscosity reducing agent, thickening agent, absorbent agent, friction reducing agent, draining agent, filler retention agent, dehydrating agent, conditioning agent, stabilising agent, film-forming agent, sizing agent, superplasticizing agent, clay inhibitor or dispersant.

## DESCRIPTION OF THE INVENTION

In the description of the invention, the term "polymer" designates the polymer resulting from the method according to the invention. This polymer has an improved degradability compared to the polymers obtained from conventional methods.

The polymer is prepared from at least three different monomers (A, $B_1$ and $B_2$). In addition to monomers A, $B_1$ and $B_2$, it may therefore comprise a hydrophilic monomer (distinct from monomers A, $B_1$ and $B_2$) chosen from anionic hydrophilic monomers, cationic hydrophilic monomers, non-ionic hydrophilic monomers, zwitterionic hydrophilic monomers, and the mixtures thereof.

The term "hydrophilic monomer" should be understood to mean a monomer that has an octanol-water partition coefficient, $K_{ow}$, less than or equal than 1, in which the partition coefficient $K_{ow}$ is determined at 25°C in an octanol-water mixture with a volume ratio of 1/1, at a pH of between 6 and 8.

The term "hydrophobic monomer" should be understood to mean a monomer that has an octanol-water partition coefficient, $K_{ow}$, greater than 1, in which the partition coefficient $K_{ow}$ is determined at 25°C in an octanol-water mixture with a volume ratio of 1/1, at a pH of between 6 and 8.

The octanol-water partition coefficient, $K_{ow}$, represents the ratio of concentrations (g/L) of a monomer between the octanol phase and the aqueous phase. It is defined as follows:

$$K_{ow} = \frac{[\text{monomer}]_{\text{octanol}}}{[\text{monomer}]_{\text{water}}}$$

By "water-soluble", this means a compound (for example a polymer or a monomer) which gives an aqueous solution without insoluble particles when it is dissolved while stirring at 25°C and with a concentration of 10 $g.l^{-1}$ in deionised water.
"X and/or Y" should be understood to mean "X", or "Y", or "X and Y".
The invention also includes all possible combinations of the various embodiments disclosed, whether they are preferred embodiments or given by way of example. Furthermore, when ranges of values are indicated, the limit values are included in these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20.
By "improved degradability", it is meant that the dispersity of the fragments of polymers obtained after hydrolysis of the polymer is less than 5.0, preferably less than 4, more preferably less than 3, and even more preferably less than 2.5.

**Polymerization method**

The polymerization according to the invention is a radical polymerization. For monomers $B_1$ and $B_2$, it is more particularly a radical polymerization by ring opening.
Ring opening polymerization (ROP) is a polymerization method in which polymerization occurs following the ring opening of a cyclic monomer. It may be ionic or radical polymerization.
Radical ring opening polymerization (rROP), implemented for monomers $B_1$ and $B_2$, combines the advantages of ring opening polymerization and radical polymerization. It is thus possible to prepare polymers carrying heteroatoms in the backbone (main polymer chain), while benefiting from the ease and robustness of a radical polymerization method.
Radical polymerization includes free radical polymerization using UV, azo, redox or thermal initiators.
The polymerization reaction is advantageously initiated by introducing a free-radical initiator. The polymerization initiator(s) used are advantageously chosen from compounds which dissociate into radicals under the polymerization conditions. In certain cases, it is advantageous to use mixtures of various polymerization initiators, for example, mixtures of redox catalysts and of azo compounds.
According to the invention, the quantity of initiator is advantageously comprised between 1 and 100,000ppm by weight relative to the total weight of monomer, preferably between 50 and 50,000ppm by weight, more preferably between 100 and 30,000ppm by weight, and even more preferably between 500 and 20,000ppm by weight.
Generally speaking, the polymer according to the invention does not require the development of any particular polymerization method. In contrast, it requires the introduction of the monomers in progressive pouring. The polymer may be obtained according to all the polymerization techniques that are well known to a person skilled in the art. In particular, the polymerization may be in solution in water or in a brine (water-in-water polymerization), or polymerization in emulsion (aqueous or inverse). Preferably, it is polymerization in solution.
In a preferred embodiment, the radical polymerization is a controlled radical polymerization. Without limitation, techniques may be mentioned, such as Iodine Transfer Polymerization (ITP), Nitroxide Mediated Polymerization (NMP), Atom Transfer Radical Polymerization (ATRP), Reversible Addition Fragmentation chain Transfer (RAFT) Polymerization, which includes MADIX (MAcromolecular Design by Interchange of Xanthates) technology, various variations of Organometallic Mediated Radical Polymerization (OMRP), and OrganoHeteroatom-mediated Radical Polymerization (OHRP).
This activation-deactivation process linked to the controlled radical polymerization enables the chains to grow at the same speed, and this, until the total consumption of the monomer, making it possible to control the molecular weights of the polymers and to obtain narrow molecular weight distributions. This will also make it possible to minimize the heterogeneity of the composition. The reversible deactivation of the growing chains lies at the origin of minimizing irreversible end reactions. The large majority of polymer chains remains in dormant form, and can therefore be reactivated. It is thus possible to functionalize the chain ends in view of priming other polymerization modes or to make chain extensions. This makes it possible to control the molecular weight of the compositions and the architecture of the polymer.
Controlled radical polymerization can therefore have the following distinctive aspects:

1- The number of polymer chains is fixed throughout the reaction,
2- The polymer chains all grow at the same speed, which is reflected by:

  * A linear increase of the molecular weights,
  * A narrowed molecular weight distribution,

3- The average molecular weight is controlled by the monomer/control agent molar ratio.

The controlled character is all the more marked that the reactivation speed of the radical chains is high in front of

the growth speed of the chains (propagation). However, in certain cases, the reactivation speed of the radical chains is greater than or equal to the propagation speed. In these cases, conditions 1 and 2 are not observed and, consequently, controlling the molecular weights is not possible.

In a preferred embodiment, the polymer is obtained by polymerization by reversible addition-fragmentation chain-transfer polymerization.

The reversible addition-fragmentation chain-transfer polymerization requires the presence of at least one control agent, advantageously of formula (I):

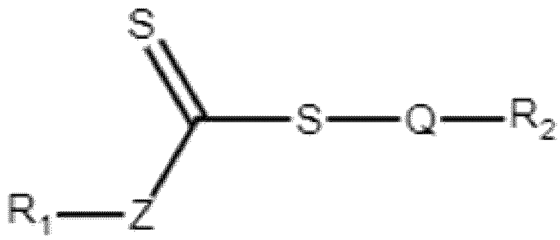

(I)

wherein

- Z represents an oxygen atom (O), a sulphur atom (S), an amine ($NR_3$) or is a direct bond to $R_1$;
- $R_1$, $R_2$ and $R_3$, which may be identical or different, represent:

  * an optionally substituted alkyl, alcenyl or alcynyl group (i), or
  * a carbon cycle (ii), saturated or not, optionally substituted or aromatic, or
  * a heterocycle (iii), saturated or not, optionally substituted or aromatic,

    these groups and cycles (i), (ii) and (iii) being able to be substituted by substituted aromatic groups or by alkoxycarbonyl or aryloxycarbonyl (-COOR), carboxy (-COOH), acyloxy ($-O_2CR$), carbamoyl ($-CON(R)_2$), cyano (-CN), alkylcarbonyl, alkylarylcarbonyl, arylcarbonyl, arylalkylcarbonyl, phtalimido, maleimido, succinimido, amidino, guanidimo, hydroxy (-OH), amino ($-N(R)_2$), halogen, allyl, epoxy, alkoxy (-OR), S-alkyl, S-aryl groups, groups having a hydrophilic or ionic character, such as carboxylic acid alkaline salts, sulfonic acid alkaline salts, alkylene polyoxide chains (POE, POP), cationic substitutes (quaternary ammonium salts);
    R represents an $C_1$-$C_{20}$ alkyl or aryl group;
    $R_3$ can further represent a hydrogen atom;

- Q is a linear or structured polymeric chain comprising n identical or different monomers comprising at least one ethylenic function;
- n is an integer of between 0 and 500, advantageously between 1 and 500, more advantageously between 1 and 100.

The monomer(s) used to form Q are advantageously chosen from the same hydrophilic monomers as those described to form the polymer.

In the $N(R)_2$ functions, the two R groups can be identical or different from one another.

In a preferred embodiment, the control agent is of formula (I), wherein Z = O.

In another preferred embodiment, the control agent is of formula (I), wherein:

- Z = O,
- Q is a linear or structured polymeric chain obtained from 1 to 100 monomers comprising at least one non-ionic hydrophilic monomer and/or at least one anionic hydrophilic monomer and/or at least one cationic hydrophilic monomer.

In another preferred embodiment, the control agent is of formula (I), wherein:

- Z = O,
- Q is a linear or structured polymeric chain obtained from 1 to 100 monomers comprising at least one non-ionic monomer and/or at least one anionic monomer.

In another embodiment, the control agent is of formula (II):

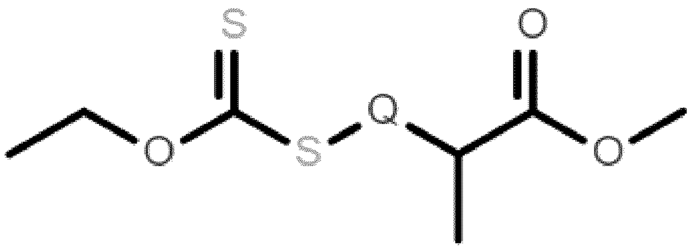

(II)

wherein Q is a linear or structured polymeric chains obtained from 1 to 100 monomers chosen from acrylamide and/or acrylic acid and/or quaternized or salified dimethylaminoethyl acrylate, preferably between 1 and 50.

In another preferred embodiment, the control agent is of formula (I), wherein Z = S.

In another embodiment, the control agent is of formula (III):

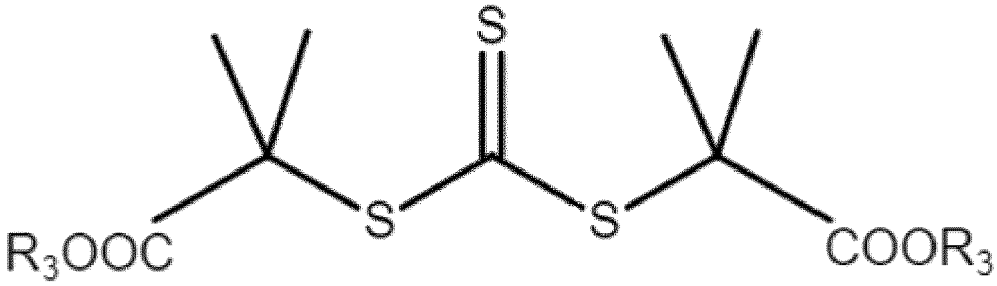

(III)

wherein

- the $R_3$ groups are identical or different, independently represent H or $CH_3$ or a cation, the cation being advantageously chosen from among cations of alkaline metals (Li, Na, K, etc.), alkaline earth metals (Ca, Mg, etc.) or ammonium (for example, ammonium ion or a tertiary ammonium), preferably sodium.

In another embodiment, the control agent is of formula (IV):

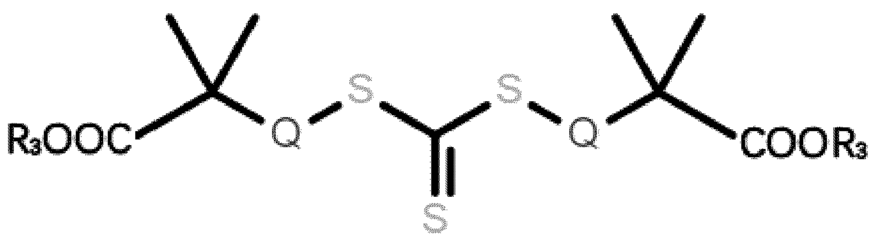

(IV)

- the $R_3$ groups are identical or different, independently represent H or $CH_3$ or a cation, the cation being advantageously chosen from among cations of alkaline metals (Li, Na, K, etc.), alkaline earth metals (Ca, Mg, etc.) or ammonium (for example, ammonium ion or a tertiary ammonium), preferably sodium;
- Q are independently linear or structured polymeric chains obtained from 1 to 100 monomers chosen from acrylamide and/or acrylic acid and/or quaternized or salified dimethylaminoethyl acrylate, preferably between 1 and 50.

In another embodiment, the control agent is of formula (V):

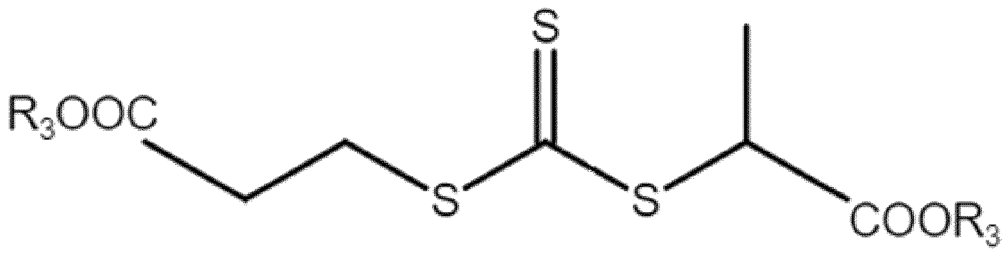

(V)

wherein

- the $R_3$ groups are identical or different, independently represent H or $CH_3$ or a cation, the cation being advantageously chosen from among cations of alkaline metals (Li, Na, K, etc.), alkaline earth metals (Ca, Mg, etc.) or ammonium (for example, ammonium ion or a tertiary ammonium), preferably sodium.

In another embodiment, the control agent is of formula (VI):

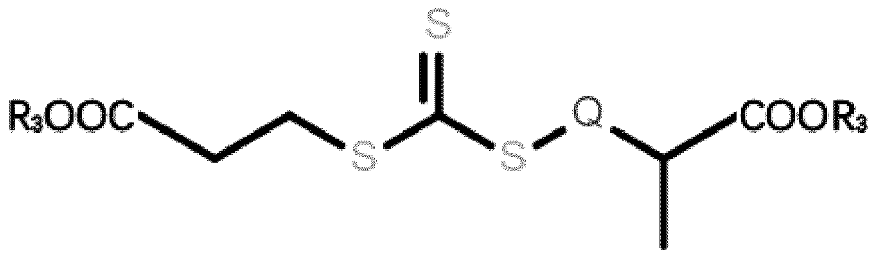

(VI)

- the $R_3$ groups are identical or different, independently represent H or $CH_3$ or a cation, the cation being advantageously chosen from among the cations of alkaline metals (Li, Na, K, etc.), alkaline earth metals (Ca, Mg, etc.) or ammonium (for example, ammonium ion or a tertiary ammonium), preferably sodium;
- Q is a linear or structured polymeric chains obtained from 1 to 100 monomers chosen from acrylamide and/or acrylic acid and/or quaternized or salified dimethylaminoethyl acrylate, preferably between 1 and 50.

According to the invention, the polymer may have a linear, branched, star-shaped, combshaped, dendritic or block structure. These structures can be obtained by selecting the initiator, the transfer agent, the polymerisation technique such as the controlled radical polymerisation called raft (Reversible Addition Chain Transfer), NMP (Nitroxide Mediated Polymerisation) or ATRP (Atom Radical Transfer Polymerisation), of the incorporation of structural monomers, of the concentration.

The radical polymerization of the monomers (in particular by ring opening for the monomers $B_1$ and $B_2$) is advantageously carried out at a temperature of between 10 and 90°C, preferably between 25 and 80°C, more preferably between 40 and 60°C.

The radical polymerization of the monomers (in particular by ring opening for the monomers $B_1$ and $B_2$) hold out between 60 minutes and 1440 minutes, preferably between 120 and 720 minutes, more preferably between 180 and 360 minutes.

Advantageously, radical polymerization takes place in an organic solvent. The organic solvent can be used in a mixture with water, or salt water (for example with ammonium sulfate). Examples of organic solvents which may be cited are: hydrocarbons such as toluene, xylene, hexane and heptane; chlorinated solvents such as methylene chloride, chloroform and dichloromethane; ethers such as diethyl ether, tetrahydrofuran and dibutyl ether; ketones such as acetone and 2-butanone; esters such as ethyl acetate and butyl acetate; nitriles such as acetonitrile; and aprotic polar solvents such as dimethylsulphoxide (DMSO) and N,N-dimethylformamide (DMF). These solvents may be used singly or as a mixture. Preferably, the polymerisation takes place in dimethyl sulphoxide.

In some cases, it is possible to use protic polar solvents such as tert-butanol. Thus the invention is not limited to organic solvents, the person skilled in the art is capable of determining which protic polar solvents are capable of functioning as a function of the cyclic monomers $B_1$ and $B_2$ used.

The control of the integration of the cyclic monomers $B_1$ and $B_2$ in the polymer chains is done by a progressive pouring polymerization.

**Polymerization method**

The polymerization method is carried out by progressively pouring at least one of monomers $B_1$ and $B_2$, that is to say gradually (for example drop by drop) throughout the polymerization (that is to say continuously).

The method according to the invention can be carried out in a polymerization vessel (or a reactor) according to the following steps:

- optionally, introduction of an initiator, advantageously in the presence of a solvent,
- progressively pouring of monomers A, $B_1$ and $B_2$, monomers A, $B_1$ and $B_2$ advantageously being in solution in a solvent,
- polymerization of monomers.

The method according to the invention can be carried out in a polymerization vessel (or a reactor) according to the following steps:

- introduction of monomer A and optionally an initiator, advantageously in the presence of a solvent,
- progressively pouring of monomers $B_1$ and $B_2$, monomers $B_1$ and $B_2$ advantageously being in solution in a solvent,
- polymerization of monomers.

The method according to the invention can be carried out in a polymerization vessel (or a reactor) according to the following steps:

- introduction of monomer A, monomer $B_1$ and optionally an initiator, advantageously in the presence of a solvent,
- progressively pouring of monomer $B_2$, monomer $B_2$ advantageously being in solution in a solvent,
- optionally, progressively pouring of monomer $B_1$, monomer $B_1$ advantageously being in solution in a solvent,
- polymerization of monomers.

The method according to the invention can be carried out in a polymerization vessel (or a reactor) according to the following steps:

- introduction of monomer A, monomer $B_2$ and optionally an initiator, advantageously in the presence of a solvent,
- progressively pouring of monomer $B_1$, monomer $B_1$ advantageously being in solution in a solvent,
- optionally, progressively pouring of monomer $B_2$, monomer $B_2$ advantageously being in solution in a solvent,
- polymerization of monomers.

The progressive pouring of the monomers may be separate pourings of monomers. In this case, the progressive pouring may be carried out simultaneously, delayed, one after the other or alternatively. It is also possible to consider interrupting a pouring of a monomer to carry out the pouring of another monomer. The following sequences can therefore be envisaged:

- progressively pouring 100% A, 100% $B_1$ and 100% $B_2$,
- for example 100% A before starting the polymerization and, after the start of the polymerization, progressively pouring 100% $B_1$ and progressively pouring 100% $B_2$, the progressive pourings of $B_1$ and $B_2$ can be simultaneous or delayed,
- one after the other: for example 100% A before the start of the polymerization, then progressively pouring 100% $B_1$ and then, after the end of the $B_1$ pouring, progressively pouring 100% $B_2$,
- one after the other: for example 100% A before the start of the polymerization, then progressively pouring 100% $B_2$ and then, after the end of the $B_2$ pouring, progressively pouring 100% $B_1$,
- 100% A before the start of the polymerization, then progressively pouring y% $B_1$ and after the y% pouring of $B_1$, progressively pouring z% $B_2$, then, after z% of $B_2$, (100-y)% $B_1$ and, after, (100-z)% $B_2$, the progressive pourings of $B_1$ and $B_2$ can be simultaneous or delayed, y and z (independently of each other) are between 0 and 100.

The monomers $B_1$ and $B_2$ can be added by progressive pouring, at a constant flow rate.

The monomers $B_1$ and $B_2$ can be added separately, by separate progressive pourings.

Monomers $B_1$ and $B_2$ can be progressively poured during the radical polymerization, the monomer A being added prior to initiating the radical polymerization.

Monomer A can be added prior to initiating the radical polymerization.

Monomer $B_1$ and monomer $B_2$ can be progressively poured during the radical polymerization, the monomer $B_1$ having a progressive pouring time different from the progressive pouring time of monomer $B_2$.

The same sequences can be envisaged by inverting monomers A, $B_1$ and $B_2$.

In one particular embodiment, the pourings have a compositional gradient in order to obtain polymers with a gradient structure.

Gradient structure polymers are polymers composed of at least two monomers in which the composition change of the monomers is gradual, unlike block polymers, which undergo a sudden composition change, and random polymers, which do not have a continuous composition change.

Depending on the sequence chosen, the polymerization of the monomers can begin before the introduction of the monomer A or the monomers $B_1$ and $B_2$. Advantageously, the polymerization of the monomers begins as soon as one of the monomers A or $B_1$ or $B_2$ is introduced.

The monomer progressive pouring(s) take place advantageously in solution in a solvent.

If necessary, the initiator is advantageously added (for example in a polymerization vessel) with a solvent before the start of the monomer progressive pouring(s).

The polymerization advantageously starts at the time when the first monomers, the solvent and the initiator are in contact.

The progressive pouring (whatever the monomer) lasts between 60 minutes and 1440 minutes, preferably between 60 minutes and 720 minutes, more preferably between 60 minutes and 360 minutes. This is the time required to introduce all of the monomer(s) concerned, not counting any interruptions to progressive pouring.

At least one of monomers $B_1$ and $B_2$ is added by progressive pouring. the progressive pouring is preferably carried out at a constant flow rate. The flow rate of a monomers progressive pouring may be identical to or different from that of the other monomer(s) progressive(s) pouring(s).

The monomer A and the monomers $B_1$ and $B_2$ may be added in liquid form or in particle form, preferably they are added in liquid form in a solvent.

The term "particle form" is understood to mean in powder form, in the form of beads or a mixture, of regular size (or not) and spherical (or not).

The monomers may be added separately or as a mixture. They are preferably added separately, for instance $B_1$ and $B_2$ in separate progressive pourings and 100% of monomer A prior to the start of the polymerization and prior to the addition of monomers $B_1$ and $B_2$.

In other words, in a preferred embodiment, the polymerization method comprises at least two progressive pourings, a first progressive pouring comprising monomer $B_1$ and a second progressive pouring comprising monomer $B_2$, while monomer A is preferably added prior to the start of the polymerization and prior to the addition of monomers $B_1$ and $B_2$.

Advantageously, the progressive pouring time of the monomer is different from the pouring time of the other(s) monomer(s), and a gradient polymer is then obtained.

The molar ratio between the monomer A and the monomers $B_1 + B_2$ is advantageously between 50:50 and 98:2, preferably between 70:20 and 95:5.

In one particular embodiment according to the invention, the monomers $B_1$ and $B_2$ are added to the polymerization vessel and the monomer A is added by progressive pouring.

When the polymer comprises several monomers A, they may be added together or separately, preferably they are added together, even more preferably prior to the start of the polymerization and prior to the addition of monomers $B_1$ and $B_2$.

According to the invention, monomers $B_1$ and $B_2$ can be introduced separately from each other or simultaneously. They can be introduced in a single pouring or in two separate progressive pourings.

The molar ratio between the monomer A, the monomer $B_1$ and the monomer $B_2$ is advantageously between 50:30:20 and 93:5:2, preferably between 70:20:10 and 90:5:5.

The monomers A, $B_1$ and $B_2$ are advantageously added separately, for example in 3 separate progressive pourings.

Monomers $B_1$ and $B_2$ are different. The monomer $B_1$ is a cyclic ketene acetal, and the monomer $B_2$ is a thionolactone.

The polymer comprises several monomers $B_1$ and $B_2$, which may be added together or separately, preferably they are added separately.

In other words, in another preferred embodiment according to the invention, the polymerization method comprises at least three progressive pourings, a first progressive pouring comprising the monomer A, a second progressive pouring comprising a monomer $B_1$ and a third progressive pouring comprising a monomer $B_2$.

Advantageously, the progressive pouring time is different from one monomer to another. The progressive pouring time of the monomer A is advantageously different from the progressive pouring time of the monomer $B_1$ which is also different from the progressive pouring time of the monomer $B_2$.

When monomer A is progressively poured, the progressive pouring of monomer A advantageously lasts between 30 minutes and 720 minutes, preferably between 30 minutes and 360 minutes, more preferably between 60 minutes and

180 minutes.

The progressive pouring of monomer $B_1$ advantageously lasts between 60 minutes and 720 minutes, preferably between 60 minutes and 480 minutes, more preferably between 60 minutes and 360 minutes.

The progressive pouring of monomer $B_2$ advantageously lasts between 60 minutes and 720 minutes, preferably between 60 minutes and 480 minutes, more preferably between 60 minutes and 360 minutes.

The progressive pourings of the monomers ($B_1$ and/or $B_2$, optionally A) can be carried out simultaneously, one after the other or in a staggered manner (that is to say that at least one of the pourings begins after the start of at least one other pouring of monomers and before the end of said pouring).

Advantageously, progressive pouring of monomer $B_2$ begins at the end of progressive pouring of monomer $B_1$.

In one particular embodiment according to the invention, the monomers $B_1$ and/or $B_2$ are added to the polymerization vessel and the monomer A is added by progressive pouring.

In one particular embodiment according to the invention, the monomer $B_1$ is added to the polymerization vessel and the monomers A and $B_2$ are then added by progressive pouring. The progressive pourings of the monomers A and $B_2$ can be carried out simultaneously, one after the other or in a staggered manner (that is to say that at least one of the progressive pourings begins after the start of at least one other progressive pouring of monomers and before the end of said progressive pouring). Advantageously, progressive pouring of monomer $B_2$ begins at the end of progressive pouring of monomer A.

In an embodiment of the invention, monomers A and $B_1$ are added to the polymerization vessel while monomer $B_2$ is added by progressive pouring.

In a preferred embodiment of the invention, monomer A is added to the polymerization vessel while monomers $B_1$ and $B_2$ are added by progressive pouring.

The present invention further relates to the polymer obtained according to the method of the invention.

## Polymer

The polymer according to the invention is a synthetic polymer comprising (advantageously consisting of) at least:

- a monomer A; and
- two cyclic monomers $B_1$ and $B_2$.

The polymer according to the invention may be water-soluble, water-swelling, or superabsorbent. Preferably, it is water-soluble.

The monomer A used in the invention may be non-ionic, anionic, or cationic. It can be used singly, in a mixture of two or more.

Depending on the applications, the nature of the PAM changes as well as their monomeric composition and the percentages of the monomers constituting them. The aim of the invention is to be able to replace any PAM with an equivalent PAM having improved degradability and equivalent performance. Thus, the invention is not limited to a monomeric percentage.

## Monomer A

The monomer A is chosen from: (meth)acrylamide, (meth)acrylamide derivatives, (meth)acrylic acid, (meth) acrylic acid derivatives and mixtures thereof. These monomers may be hydrophilic nonionic, hydrophilic anionic, hydrophilic cationic, or hydrophilic zwitterionic monomers.

### *Non-ionic Hydrophilic Monomer A*

Advantageously, the hydrophilic non-ionic monomer(s) that can be used in the invention are chosen, in particular, from the group comprising water-soluble vinyl monomers such as acrylamide, methacrylamide, N-alkylacrylamides, N-alkylmethacrylamides, N,N-dialkylacrylamides (for example N,N-dimethylacrylamide or N,N-diethylacrylamide), N,N-dialkylmethacrylamides, alkoxylated esters of acrylic acid, alkoxylated esters of methacrylic acid, N-vinylpyrrolidone, N-methylolacrylamide, N-vinylformamide (NVF), N-vinylacetamide, N-vinylimidazole, N-vinyl succinimide, acryloyl morpholine (ACMO), glycidyl methacrylate, glyceryl methacrylate, diacetone acrylamide, hydroxyalkyl (meth)acrylate, thioalkyl (meth)acrylate, hydroxy alkyl acrylates, hydroxy alkyl methacrylates, and mixtures thereof. Of these non-ionic monomers, the alkyl groups are advantageously $C_1$-$C_5$ groups, and more advantageously $C_1$-$C_3$ groups. They are preferably linear alkyls. Preferably, the hydrophilic non-ionic monomer is acrylamide.

*Anionic hydrophilic monomer A*

Advantageously, the hydrophilic anionic monomer(s) that may be used in the scope of the invention may be chosen from a broad group. These monomers may have vinyl functions (advantageously acrylic, maleic, fumaric, malonic, itaconic, or allylic), and contain a carboxylate, phosphonate, phosphate, sulphate or sulphonate group, or another anionically charged group. Examples of suitable monomers include acrylic acid; methacrylic acid; dimethylacrylic acid; itaconic acid; $C_1$-$C_{22}$ itaconic acid semi-ester; itaconic anhydride; itaconamide; crotonic acid; acryloyl chloride; maleic acid; fumaric acid; undecanoic acrylamido acid; 3-acrylamido-3-methylbutanoic acid; maleic anhydride; strong acid monomers having, for example, a sulphonic acid or phosphonic acid function, such as vinylsulphonic acid, vinylphosphonic acid, allylsulphonic acid, methallylsulphonic acid, 2-methylidenepropane-1, 3-disulphonic acid, 2-sulphoethylmethacrylate, sulphopropylmethacrylate, sulphopropylacrylate, allylphosphonic acid, styrene sulphonic acid, 2-acrylamido-2-methylpropanesulphonic acid (ATBS), 2-acrylamido-2-methylpropane disulphonic acid; water-soluble salts of these monomers such as their alkali metal salts (distinct from the crystalline form of the sodium salt of 2-acrylamido-2-methylpropanesulphonic acid), alkaline-earth metal salts or ammonium salts; and mixtures thereof. Preferably, the hydrophilic anionic monomer(s) is acrylic acid and/or its salts.

In one particular embodiment of the invention, the hydrophilic anionic monomer(s) may be salified. It may also be a mixture of acid form and salified form, for example a mixture of acrylic acid and acrylate.

By salified, it is meant the substitution of a proton of at least one acid function of the -R(=O)-OH type (with R = P, S or C) of the anionic monomer by a metal or ammonium cation to form a salt of the -R(=O)-OX type (X being a metal cation or an organic cation). In other words, the non-salified form corresponds to the acid form of the monomer, for example -C(=O)-OH in the case of the carboxylic acid function, whereas the salified form of the monomer corresponds to the form -C(=O)-$O^-$ $X^+$, $X^+$ corresponding to an alkaline or ammonium cation. The salification of the acid functions of the polymer may be partial or total.

The salified form advantageously corresponds to the salts of alkali metals (Li, Na, K, etc.), alkaline-earth metals (Ca, Mg, etc.) or ammonium (for example the ammonium ion or a tertiary ammonium). The preferred salts are sodium salt.

The salification may take place before, during or after polymerization.

*Cationic hydrophilic monomer A*

Advantageously, the cationic hydrophilic monomer(s) that can be used in the invention are chosen from monomers derived from vinyl-type units (advantageously acrylamide, acrylic, allylic or maleic), these monomers having a phosphonium, tertiary ammonium or quaternary ammonium function. Diallyldialkyl ammonium salts, like diallyl dimethyl ammonium chloride (DADMAC); acidified or quaternized dialkyl-aminoalkyl(meth)acrylamide salts, like for example methacrylamido-propyl trimethyl ammonium chloride (MAPTAC), acrylamidopropyl trimethyl ammonium chloride (APTAC); acidified or quaternized dialkyl-aminoalkyl acrylate salts, like quaternized or salified dimethylaminoethyl acrylate (DMAEA); acidified or quaternized dialkyl aminoalkyl methacrylate salts like quaternized or salified dimethylaminoethyl methacrylate (DMAEMA); acidified or quaternized N,N-dimethylallylamine salts; acidified or quaternized diallylmethylamine salts; acidified or quaternized diallylamine salts; vinylamine obtained by hydrolysis (basic or acid) of an amide group -N($R^2$)-CO-$R^1$ with $R^1$ and $R^2$ being, independently, a hydrogen atom or an alkyl chain of 1 to 6 carbons, for example, vinylamine coming from the hydrolysis of vinylformamide; vinylamine obtained by Hofmann degradation; and their mixtures can be cited, in particular and in a non-limiting manner. Advantageously, the alkyl groups are $C_1$-$C_3$.

A person skilled in the art will know how to prepare the quaternized monomers, for example by means of an R-X-type quaternization agent, R being an alkyl group and X being a halogen or a sulfate.

By "quaternization agent", this means a molecule being able to alkylate a tertiary amine.

The quaternization agent can be chosen from among dialkyl sulfates comprising 1 to 6 carbon atoms or alkyl halides comprising 1 to 6 carbon atoms. Preferably, the quaternization agent is chosen from among methyl chloride, benzyl chloride, dimethyl sulfate or diethyl sulfate.

Furthermore, the present invention also covers DADMAC, APTAC and MAPTAC monomers in which the counterion is sulphate, fluoride, bromide or iodide instead of chloride.

*Zwitterionic hydrophilic monomer A*

Advantageously, the hydrophilic zwitterionic monomer(s) may be a derivative of a vinyl-type unit (advantageously acrylamide, acrylic, allylic or maleic), this monomer having a amine, tertiary ammonium or quaternary ammonium function and a carboxylic (or carboxylate), sulphonic (or sulphonate) or phosphoric (or phosphate) acid function. Mention may be made, in particular and in a non-limiting manner, of dimethylaminoethyl acrylate derivatives, such as 2-((2-(acryloyloxy)ethyl) dimethylammonio) dimethylammonio) ethane-1-sulphonate, 3-((2-(acryloyloxy)ethyl) dimethylammonio) propane-1-sulphonate, 4-((2-(acryloyloxy)ethyl) dimethylammonio) butane-1-sulphonate, [2-(acryloyloxy)ethyl] (dimethylammonio) acetate, dimethylaminoethyl methacrylate derivatives, such as 2-((2-(methacryloyloxy) ethyl) dimethylammonio) ethane-1-sulphonate, 3-((2-(methacryloyloxy) ethyl) dimethylammonio) propane-1-sulphonate, 4-((2-(methacryloyloxy) ethyl) dimethylammonio) butane-1-sulphonate, [2-(methacryloyloxy)ethyl] (dimethylammonio) acetate, dimethylamino propylacrylamide derivatives, such as 2-((3-acrylamidopropyl) dimethylammonio) ethane-1-sulphonate, 3-((3-acrylamidopropyl) dimethylammonio) propane-1-sulphonate, 4-((3-acrylamidopropyl) dimethylammonio) butane-1-sulphonate, [3-(acryloyloxy) propyl] (dimethylammonio) acetate, dimethylamino propyl methylacrylamide derivatives such as 2-((3-methacrylamidopropyl) dimethylammonio) ethane-1-sulphonate, 3-((3-methacrylamidopropyl) dimethylammonio) propane-1-sulphonate, 4-((3-methacrylamidopropyl) dimethylammonio) butane-1-sulphonate and [3-(methacryloyloxy)propyl] (dimethylammonio) acetate and mixtures thereof.

In a preferred embodiment according to the invention, the polymer does not comprise hydrophobic monomer.

**Branching agent and chain transfer agent**

The polymer according to the invention may comprise a branching agent.

The branching agent is advantageously chosen from:

- structure agents, being able to be chosen from the group comprising polyethylenically unsaturated compounds (having, as a minimum, two unsaturated functions) different from monomer A, like for example, vinyl functions, in particular, allylic or acrylic, and, for example, methylene bis acrylamide (MBA), triallyamine, or tetraallylammonium chloride or 1,2 dihydroxyethylene bis-(N-acrylamide) can be cited,
- compounds having at least two epoxy functions,
- compounds having at least one unsaturated function and an epoxy function,
- macroinitiators such as polyperoxides, polyazoics and transfer polyagents, such as polymercaptan polymers, and polyols,
- functionalized polysaccharides,
- water-soluble metal complexes composed:

    * of a metal of valence greater than 3 such as, as an example and in a non-limiting manner, aluminum, boron, zirconium, or also titanium, and
    * of a ligand carrying a hydroxyl function.

In a preferred embodiment, the branching agent is chosen from branching agents having a hydrolyzable function, in particular ester. In other words, the branching agent is advantageously a labile branching agent.

A labile branching agent is a branching agent that can be degraded in the presence of certain heat conditions and/or over time, after being incorporated into the polymer structure. The storage conditions of the polymer, the temperature and the presence of electrolytes can cause cleavage of the bonds in the labile branching agent.

The labile branching agent is advantageously chosen from diamine diacrylamides and diamine methacrylamides such as piperazine diacrylamide; acrylate esters; methacrylate esters; ethylene glycol diacrylate; polyethylene glycol (PEG) diacrylate; trimethylopropane trimethacrylate; ethoxylated trimethylol triacrylate; ethoxylated pentaerythritol tetracrylate; vinyl esters of di-, tri- or tetrafunctional acids; allylic esters of di-, tri- or tetrafunctional acids; and mixtures thereof. The labile branching agent is preferably chosen from water-soluble diacrylates such as PEG 200 diacrylate, PEG 400 diacrylate, PEG 600 diacrylate, PEG 1000 diacrylate, ethylene glycol diacrylate, diethylene glycol diacrylate, trethylene glycol diacrylate, tetraethylene glycol diacrylate, and polyfunctional vinyl derivatives of a polyalcohol such as ethoxylated trimethylol (9-20) triacrylate.

When the polymer is water-soluble and comprises a branching agent, the polymer remains soluble in water. A person skilled in the art knows how to adjust the quantity of branching agent and, possibly, the quantity of transfer agent needed to obtain this result.

In one particular embodiment, the polymer comprises no branching agent.

In one particular embodiment, the polymer may comprise a transfer agent.

The transfer agent is advantageously chosen from among methanol; isopropylic alcohol; sodium hypophosphite; calcium hypophosphate; magnesium hypophosphate, ammonium hypophosphate; formic acid; sodium formiate; calcium formiate; magnesium formiate; potassium formiate; ammonium formiate; 2-mercaptoethanol; 3-mercaptopropanol; glycol dithiopropylene; thioglycerol; thioglycolic acid; thiohydracrylic acid; thiolactic acid; thiomalic acid; cysteine; aminoethanethiol; thioglycolates; allyl phosphites; allyl mercaptans; like n-dodecyl mercaptan; sodium methallysulfonate; calcium methallysulfonate; magnesium methallysulfonate; potassium methallysulfonate; ammonium methallysulfonate; alkyl phosphites like tri alkyl ($C_{12}$-$C_{15}$) phosphites, di-oleyl-hydrogenophosphites, dibutyl phosphite; dialkyldithiophosphates like dioctyl phosphonate; tertiary nonylmercaptan; 2-ethylhexyl thioglycolate; n-octyl mercaptan; iso-octylthioglycolate; 2-ethylhexyl thioglycolate; 2-ethylhexyl mercaptoacetate; polythiols; and their mixtures. Preferably, it is sodium hypophosphite or sodium formate.

In one particular embodiment, the polymer comprises no transfer agent.

**Molecular weight**

The polymer according to the invention may have a molecular weight covering all applications in which PAM may be used. Thus, the polymer according to the invention may have a molecular weight of between 500g/mol and 50,000g/mol, or between 50,000 and 100,000g/mol, or between 100,000 and 500,000g/mol, or between 500,000 and 1,000,000g/mol, or between 1,000,000 and 3,000,000g/mol, or between 3,000,000 and 5,000,000g/mol, or between 5,000,000 and 10,000,000g/mol, or between 10,000,000 and 30,000,000g/mol, or else greater than 30,000,000g/mol. This is the weight mean molecular weight.

The molecular weight is advantageously determined from the intrinsic viscosity of the polymer. The intrinsic viscosity can be measured by methods known to a person skilled in the art and can be calculated from the reduced viscosity values for different polymer concentrations by a graphical method consisting in plotting the reduced viscosity values (y-axis) against the concentration (x-axis) and extrapolating the curve to zero concentration. The intrinsic viscosity value is plotted on the y-axis or using the least-squares method. The molecular weight can then be determined using the Mark-Houwink equation:

$$[\eta] = K.M^{\alpha}$$

[η] represents the intrinsic viscosity of the polymer as determined by the solution viscosity method.
K represents an empirical constant.
M represents the molecular weight of the polymer.
$\alpha$ represents the Mark-Houwink coefficient.
K and $\alpha$ depend on the particular polymer-solvent system.

**Monomers $B_1$** and $B_2$

The cyclic monomers used in the context of the invention are monomer $B_1$ (cyclic ketene acetal), and monomer $B_2$ (thionolactone).

The cyclic ketene acetal $B_1$ is advantageously chosen from: 2-methylene-1,3-dioxepane (MDO), 5,6-benzo-2-methylene-1,3-dioxepane (BMDO), 2-methylene-4-phenyl-1,3-dioxolane (MPDL), 2-methylene-1,3,6-trioxocane (MTC), and mixtures thereof. Preferably, it is 2-methylene-1,3-dioxepane (MDO).

Advantageously, the quantity of cyclic ketene acetal $B_1$ in the polymer is comprised between 5 and 30 mol%, with respect to the total quantity of monomers in the polymer, preferably between 5 and 20 mol%.

The thionolactone $B_2$ is advantageously chosen from: dibenzo[c,e]oxepine(7H)-5-thione (DOT), ε-thionocaprolactone, 3,3-dimethyl-2,3-dihydro-5H-benzo[e][1,4]dioxepine-5-thione (DBT) and mixtures thereof. Preferably, it is 3,3-dimethyl-2,3-dihydro-5Hbenzo[e][1,4]dioxepine-5-thione.

Advantageously, the quantity of thionolactone $B_2$ in the polymer is comprised between 5 and 20 mol%, with respect to the total quantity of monomer in the polymer, preferably between 5 and 15 mol%.

In a preferred embodiment according to the invention, the monomer A is selected from the group consisting of: (meth)acrylamide, (meth)acrylamide derivatives, (meth)acrylic acid, (meth)acrylic acid derivatives, and mixtures thereof.

**Use**

The present invention also relates to the use of this polymer in: hydrocarbon recovery (oil or gas); drilling or cementing wells; stimulation of hydrocarbon wells (oil or gas), for example hydraulic fracturing; conformance; diversion; open, closed or semi-closed circuit water treatment; treatment of fermentation broth; sludge treatment; construction; paper or cardboard manufacture; batteries; wood treatment; treatment of hydraulic composition (concrete, cement, mortar and aggregates); mining; formulation of cosmetic products; formulation of detergents; textile manufacture; geothermal energy; manufacture of diapers; or agriculture.

Finally the present invention also relates to the use of this polymer as a flocculant, coagulant, binding agent, fixing agent, viscosity reducing agent, thickening agent, absorbent agent, friction reducing agent, draining agent, filler retention agent, dehydrating agent, conditioning agent, stabilising agent, film-forming agent, sizing agent, superplasticizing agent, clay inhibitor or dispersant.

The invention and the advantages procured thereby will be better understood upon reading the following examples provided for illustration purposes and not intended to limit the scope of the invention.

**EXAMPLES**

List of abbreviations:

AM or AMD: Acrylamide
DOT: Dibenzo[c,e]oxepine(7H)-5-thione
AIBN: Azobisisobutyronitrile
DMSO: Dimethyl sulfoxide
THF: Tetrahydrofuran
*Đ*: Dispersity
MDO: 2-methylene-1,3-dioxepane
CDTPA : 4-cyano-4-[(dodecylsulfanylthiocarbonyl)sulfanyl]pentanoic acid
DMAEA: dimethylaminoethyl acrylate quaternized with methyl chloride
ATBS: 2-acrylamido-2-methylpropanesulphonic acid

**Accelerated hydrolysis procedure**

In a 5 ml vial equipped with a magnetic stirrer, 5 mg of a desired polymer is dissolved in 1 ml of sodium hydroxide solution (5% by weight in water). The mixture is then stirred for 24 hours at ambient temperature. The solution comprising the polymer is then cooled and 1.5 ml of an aqueous HCl solution (1M) are then added. The resulting solution is then dried at 40°C under vacuum to give a white powder. The degraded polymer is analyzed by SEC chromatography.

- Instrument: SEC

  * Columns: PL PolarGel-M 300 x 7.5 mm; bead diameter 8 μm; molar mass range 1000- 500,000 g/mol, preceded by a PL PolarGel-M column, 50 x 7. 5 mm; ball diameter 8 μm -

- Method:

  * Temperature: 60°C
  * Mobile phase: DMSO, 100 mM LiBr + 0.36% by weight of 2,6-di-tert-butyl-4- methylphenol (BHT)
  * Flow rate: 0.7 mL/min
  * Detection: Triple detection system (Viscotek TDA/GPCmax from Malvern) with:

  - Differential refractive index detector;
  - Low angle and right angle light scattering detector;
  - Differential viscometer detector.

Polymer 1 - Conventional polymerization (zero pouring) - AM/MDO/DOT

3.78 mmol of AM, 0.21 mmol of DOT, 0.014 mmol of CDTPA, and 0.004 mmol of AIBN were added to a 10mL round-bottomed flask equipped with a mechanical stirrer, with a thermometer, with a condenser and with a dip tube in 2.3 mL of a DMSO/water mixture (86/14%v). The medium is bubbled with argon, to remove the dissolved oxygen, for 30 minutes at room temperature. The mixture is then heated to 80°C for 24 h under stirring. After cooling to ambient temperature, the polymer is recovered by precipitation in THF, then centrifuged at 5,000 rpm for 10 min. After removal of the liquid fraction, THF is added and the polymer is suspended in an ultrasonic bath. The polymer is then filtered and dried at 40°C under vacuum for 24 h. The result is polymer 1.

Polymer 2 - Polymerization by pouring (1 pouring) - AM/MDO + DOT

A first solution comprising 3.78 mmol of AM, 0.21 mmol of MDO, 0.014 mmol of CDTPA, and 0.003mmol of AIBN is prepared in a 10mL round-bottomed flask equipped with a mechanical stirrer, with a thermometer, with a condenser and with a dip tube in 2.3mL of a DMSO/water mixture (80/20%v). A second solution is prepared, corresponding to the pouring, comprising 0.21 mmol of DOT, 0.001 mmol of AIBN in 0.7 mL of DMSO. The two solutions bubbled with argon, to remove the dissolved oxygen, for 30 minutes at room temperature. The first solution was heated to 80°C under stirring. The second solution is injected by pouring over 6 hours with (a constant flow rate of 116 μL/h). 24h after starting to add the second

solution, a solution of 0.002 mmol of AIBN in 70μL of DMSO (degassed with argon) is added to remove residual monomers. After cooling to ambient temperature, the polymer is recovered by precipitation in THF, then centrifugated at 5,000 rpm during 10 minutes. After removal of the liquid fraction, THF is added and the polymer is suspended in an ultrasonic bath. The polymer is then filtered and dried at 40°C under vacuum for 24 h. The result is polymer 2.

Polymer 3 - Cast polymerization (2 pourings) - AM + MDO + DOT

A first solution comprising 3.8 mmol AM, 0.014 mmol CDTPA and 0.002 mmol AIBN in 0.9 mL DMSO/water (80/20%v) is prepared in a 10 mL round-bottomed flask fitted with a mechanical stirrer, thermometer, cooler and dip stick. A second solution is prepared, corresponding to the first cast, comprising 0.21 mmol MDO, 0.001 mmol AIBN in 0.7 mL DMSO. Finally, a third solution is prepared, corresponding to a second cast, comprising 0.21 mmol DOT, 0.001 mmol AIBN in 0.7 mL DMSO. All three solutions are bubbled with argon to remove dissolved oxygen for 30 min at room temperature. The first solution is heated to 80°C with stirring. The second solution is injected by pouring over a period of 6 h (at a constant flow rate of 116 μL/h). At the end of the addition of the second solution, the third solution is injected by pouring in 6h (a constant flow rate of 116 μL/h). After 24 hours from the start of addition of the second solution, a solution of 0.002 mmol AIBN in 70μL DMSO (degassed with argon) is added to remove residual monomers. After cooling to room temperature, the polymer is recovered by precipitation in THF, then centrifuged at 5,000 rpm for 10 minutes. After removal of the liquid fraction, THF is added and the polymer is suspended in an ultrasonic sonic bath. The polymer is then filtered and dried at 40°C under vacuum for 24 h. The result is polymer 3.

The polymerization processes for polymers 1 to 3 are reproduced by modifying the chemical composition to form polymers 4 to 9. The compositions of these polymers are summarized in Table 1.

Table 1: Degradation results of polymers 1 to 9

| **Polymer** | **Process** | **Final polymer** | | **Degraded polymer** | |
|---|---|---|---|---|---|
| | | **Mw ($g.mol^{-1}$)** | **Đ** | **Mw ($g.mol^{-1}$) (% Mw loss)** | **Đ** |
| Polymer 1 (AM/MDO/DOT 90/5/5 mol% | Conventional | 37 800 | 2.1 | 9200 | 5.9 |
| Polymer 2 AM/MDO/DOT 90/5/5 mol% | 1 pouring | 45 000 | 2.2 | 6 300 | 4.1 |
| Polymer 3 AM/MDO/DOT 90/5/5 mol% | 2 pourings | 42 800 | 2.4 | 5 900 | 3.6 |
| Polymer 4 AM/ DMAEA /MDO/DOT 60/30/5/5 mol% | Conventional | 25 300 | 2.0 | 8 400 | 4.9 |
| Polymer 5 AM/ DMAEA /MDO/DOT 60/30/5/5 mol% | 1 pouring | 31 600 | 1.9 | 6 200 | 3.8 |
| Polymer 6 AM/ DMAEA /MDO/DOT 60/30/5/5 mol% | 2 pourings | 32 600 | 2.1 | 5 400 | 3.6 |
| Polymer 7 AM/ATBS/MDO/DOT 70/20/5/5 mol% | Conventional | 34 100 | 1.8 | 9 900 | 5.0 |
| Polymer 8 AM/ATBS/MDO/DOT 70/20/5/5 mol% | 1 pouring | 31 800 | 2.0 | 7 500 | 4.0 |
| Polymer 9 AM/ATBS/MDO/DOT 70/20/5/5 mol% | 2 pourings | 29 000 | 1.9 | 7200 | 3.2 |

The polymerization method according to the invention allows obtaining degraded polymers with more homogeneous dispersity. It is therefore possible to obtain polymer fragments with a lower molecular weight and this is reflected in the obtaining of a polymer with improved degradability.

## Claims

**1.** Method for the preparation of a polymer by radical polymerization of at least three monomers A, $B_1$ and $B_2$:

- monomer A being chosen from the group consisting of: (meth)acrylamide, (meth)acrylamide derivatives, (meth) acrylic acid, (meth)acrylic acid derivatives and mixtures thereof; and
- monomer $B_1$ being a cyclic ketene acetal;
- monomer $B_2$ being a thionolactone;

in which at least one of monomer $B_1$ and monomer $B_2$ is progressively poured during the radical polymerization.

2. Method according to claim 1, ***characterized* in that** the radical polymerisation lasts between 60 minutes and 1440 minutes.

3. Method according to any one of the preceding claims, ***characterized* in that** the monomers $B_1$ and $B_2$ are added by progressive pouring, at a constant flow rate.

4. Method according to any one of the preceding claims, ***characterized* in that** the monomers $B_1$ and $B_2$ are added separately, by separate progressive pourings.

5. Method according to any one of the preceding claims, ***characterized* in that** monomers $B_1$ and $B_2$ are progressively poured during the radical polymerization,
the monomer A being added prior to initiating the radical polymerization.

6. Method according to claim 1 or 2, ***characterized* in that** monomer A is added prior to initiating the radical polymerization.

7. Method according to any one of the preceding claims, ***characterized* in that** monomer $B_1$ and monomer $B_2$ are progressively poured during the radical polymerization,
the monomer $B_1$ having a pouring time different from the pouring time of monomer $B_2$.

8. Method according to any one of the preceding claims, ***characterized* in that** the polymerization reaction is carried out with a monomer A:monomers $B_1$+$B_2$ molar ratio of between 50:50 and 98:2.

9. Method according to any one of the preceding claims, ***characterized* in that** the polymerization reaction is carried out with a monomer A:monomer $B_1$:monomer $B_2$ molar ratio of between 50:30:20 and 93:5:2.

10. Method according to any one of the preceding claims, ***characterized* in that** the progressive pouring of the monomer $B_2$ begins at the end of the progressive pouring of the monomer $B_1$.

11. Method according to any one of the preceding claims, ***characterized* in that** the monomer $B_1$ is a cyclic ketene acetal selected from the group consisting of: 2-methylene-1,3-dioxepane, 5,6-benzo-2-methylene-1,3-dioxepane, 2-methylene-4-phenyl-1,3-dioxolane, 2-methylene-1,3,6-trioxocane, and mixtures thereof.

12. Method according to any one of the preceding claims, ***characterized* in that** the monomer $B_2$ is a thionolactone selected from the group consisting of:
dibenzo[c,e]oxepine(7H)-5-thione, ε-thionocaprolactone, 3,3-dimethyl-2,3-dihydro-5H-benzo[e][1,4]dioxepine-5-thione and mixtures thereof.

13. Polymer obtained according to any one of the preceding claims.

14. Use of a polymer according to claim 13, in hydrocarbon recovery (oil or gas); drilling or cementing wells; stimulation of hydrocarbon wells; open, closed or semi-closed circuit water treatment; treatment of fermentation broth; sludge treatment; construction; paper or cardboard manufacture; batteries; wood treatment; treatment of hydraulic composition; mining; formulation of cosmetic products; formulation of detergents; textile manufacture; geothermal energy; manufacture of diapers; or agriculture.

15. Use of a polymer according to claim 13 as a flocculant, coagulant, binding agent, fixing agent, viscosity reducing agent, thickening agent, absorbent agent, friction reducing agent, draining agent, filler retention agent, dehydrating agent, conditioning agent, stabilising agent, film-forming agent, sizing agent, superplasticizing agent, clay inhibitor or dispersant.

**Patentansprüche**

1. Verfahren zur Herstellung eines Polymers durch radikalische Polymerisation von mindestens drei Monomeren A, $B_1$ und $B_2$:

- Monomer A, ausgewählt aus der Gruppe bestehend aus: (Meth)acrylamid, (Meth)acrylamid-Derivaten, (Meth)acrylsäure, (Meth)acrylsäure-Derivaten und deren Mischungen; und
- Monomer $B_1$, das ein cyclisches Ketenacetal ist;
- Monomer $B_2$, ein Thionolacton ist;

wobei mindestens eines der Monomere $B_1$ und $B_2$ während der radikalischen Polymerisation allmählich zugegeben wird.

2. Verfahren nach Anspruch 1, **dadurch *gekennzeichnet,* dass** die radikalische Polymerisation zwischen 60 Minuten und 1.440 Minuten dauert.

3. Verfahren nach einem der vorstehenden Ansprüche, **dadurch *gekennzeichnet,* dass** die Monomere $B_1$ und $B_2$ allmählich mit konstantem Durchsatz zugegeben werden.

4. Verfahren nach einem der vorstehenden Ansprüche, **dadurch *gekennzeichnet,* dass** die Monomere $B_1$ und $B_2$ getrennt und allmählich zugegeben werden.

5. Verfahren nach einem der vorstehenden Ansprüche, **dadurch *gekennzeichnet,* dass** die Monomere $B_1$ und $B_2$ während der radikalischen Polymerisation allmählich zugegeben werden,
wobei das Monomer A vor Beginn der radikalischen Polymerisation zugegeben wird.

6. Verfahren nach Anspruch 1 oder 2, **dadurch *gekennzeichnet,* dass** das Monomer A vor Beginn der radikalischen Polymerisation zugegeben wird.

7. Verfahren nach einem der vorstehenden Ansprüche, **dadurch *gekennzeichnet,* dass** das Monomer $B_1$ und das Monomer $B_2$ während der radikalischen Polymerisation allmählich zugegeben werden,
wobei das Monomer $B_1$ eine andere Zugabezeit als das Monomer $B_2$ aufweist.

8. Verfahren nach einem der vorstehenden Ansprüche, **dadurch *gekennzeichnet,* dass** die Polymerisationsreaktion mit einem Molverhältnis von Monomer A zu Monomeren $B_1$+$B_2$ zwischen 50:50 und 98:2 durchgeführt wird.

9. Verfahren nach einem der vorstehenden Ansprüche, **dadurch *gekennzeichnet,* dass** die Polymerisationsreaktion mit einem Molverhältnis von Monomer A:Monomer $B_1$:Monomer $B_2$ zwischen 50:30:20 und 93:5:2 durchgeführt wird.

10. Verfahren nach einem der vorstehenden Ansprüche, **dadurch *gekennzeichnet,* dass** die allmähliche Zugabe des Monomers $B_2$ am Ende der allmählichen Zugabe des Monomers $B_1$ beginnt.

11. Verfahren nach einem der vorstehenden Ansprüche, **dadurch *gekennzeichnet,* dass** das Monomer $B_1$ ein cyclisches Ketenacetal ist, das aus der Gruppe bestehend aus 2-Methylen-1,3-dioxepan, 5,6-Benzo-2-methylen-1,3-dioepan, 2-Methylen-4-phenyl-1,3-dioxolan, 2-Methylen-1,3,6-trioxocan und deren Mischungen, ausgewählt ist.

12. Verfahren nach einem der vorstehenden Ansprüche, **dadurch *gekennzeichnet,* dass** das Monomer $B_2$ ein Thionolacton ist, das aus der Gruppe bestehend aus Dibenzo[c,e]oxepin(7H)-5-thion, ε-Thionocaprolacton, 3,3-Dimethyl-2,3-dihydro-5H-benzo[e][1,4]dioxepin-5-thion und deren Mischungen, ausgewählt ist.

13. Polymer, das nach einem der vorstehenden Ansprüche erhalten wird.

14. Verwendung eines Polymers nach Anspruch 13 in den Bereichen Kohlenwasserstoffgewinnung (Öl oder Gas), Bohren oder Zementieren von Bohrlöchern, Stimulation von Kohlenwasserstoffbohrlöchern, Wasseraufbereitung in offenen, geschlossenen oder halbgeschlossenen Kreisläufen, Behandlung von Fermentationsbrühen, Schlammbehandlung, Bausektor, Papier- oder Karton-herstellung, Batterien, Holzbehandlung, Behandlung von hydraulischen Konstruktionen, Bergbau, Herstellung von Kosmetikprodukten und Reinigungs-mitteln, Textilfertigung, Geothermie, Windelproduktion und Landwirtschaft.

15. Verwendung eines Polymers nach Anspruch 13 als Flockungsmittel, Koagulierungsmittel, Bindemittel, Fixiermittel, Viskositätsreduktionsmittel, Verdickungsmittel, Absorptionsmittel, Reibungsreduktionsmittel, Entwässerungs-mittel, Füllstoffrückhaltemittel, Dehydratisierungsmittel, Konditionierungsmittel, Stabilisierungsmittel, Filmbildner, Leimungsmittel, Superplastifizierungsmittel, Toninhibitor oder Dispergiermittel.

**Revendications**

1. Procédé de préparation d'un polymère par polymérisation radicalaire d'au moins trois monomères A, $B_1$ et $B_2$ :

    - le monomère A étant choisi dans le groupe constitué de : (méth)acrylamide, dérivés de (méth)acrylamide, acide (méth)acrylique, dérivés d'acide (méth)acrylique et leurs mélanges ; et
    - le monomère $B_1$ étant un acétal de cétène cyclique,
    - le monomère $B_2$ étant un thionolactone ;

    dans lequel au moins un des monomères $B_1$ et $B_2$ est progressivement versé pendant la polymérisation radicalaire.

2. Procédé selon la revendication *1,* ***caractérisé*** **en ce que** la polymérisation radicalaire dure entre 60 minutes et 1440 minutes.

3. Procédé selon l'une des revendications précédentes, ***caractérisé*** **en ce que** les monomères $B_1$ et $B_2$ sont versés progressivement, à un débit constant.

4. Procédé selon l'une des revendications précédentes, ***caractérisé*** **en ce que** les monomères $B_1$ et $B_2$ sont ajoutés séparément, en coulées distinctes.

5. Procédé selon l'une des revendications précédentes, ***caractérisé*** **en ce que** les monomères $B_1$ et $B_2$ sont versés progressivement pendant la polymérisation radicalaire, le monomère A étant ajouté avant l'initiation de la polymérisation radicalaire.

6. Procédé selon la revendication 1 ou 2, ***caractérisé*** en ce le monomère A est ajouté avant l'initiation de la polymérisation radicalaire.

7. Procédé selon l'une des revendications précédentes, ***caractérisé*** **en ce que** les monomères $B_1$ et $B_2$ sont versés progressivement pendant la polymérisation radicalaire, le monomère $B_1$ ayant un temps d'addition différent du temps d'addition du monomère $B_2$.

8. Procédé selon l'une des revendications précédentes, ***caractérisé*** **en ce que** la réaction de polymérisation est réalisée avec un rapport molaire monomère A:monomères $B_1$+$B_2$ compris entre 50:50 et 98:2.

9. Procédé selon l'une des revendications précédentes, ***caractérisé*** **en ce que** la réaction de polymérisation est réalisée avec un rapport molaire monomère A:monomère $B_1$:monomère $B_2$ compris entre 50:30:20 et 93:5:2.

10. Procédé selon la revendication 7 ou 8, ***caractérisé*** **en ce que** la coulée du monomère $B_2$ commence à la fin de la coulée du monomère $B_1$.

11. Procédé selon l'une des revendications précédentes, ***caractérisé*** **en ce que** le monomère $B_1$ est un acétal de cétène cyclique choisi dans le groupe constitué de : 2-methylene-1,3-dioxepane, 5,6-benzo-2-methylene-1,3-dioxepane, 2-methylene-4-phenyl-1,3-dioxolane, 2-methylene-1,3,6-trioxocane, et leurs mélanges.

12. Procédé selon l'une des revendications précédentes, ***caractérisé*** **en ce que** le monomère $B_2$ est une thionolactone choisie dans le groupe constitué de :
    dibenzo[c,e]oxepine(7H)-5-thione, ε-thionocaprolactone, 3,3-dimethyl-2,3-dihydro-5Hbenzo[e][1,4]dioxepine-5-thione et leurs mélanges.

13. Polymère obtenu selon l'une des revendications précédentes.

14. Utilisation d'un polymère selon la revendication 13, dans la récupération d'hydrocarbures (pétrole et gaz) ; dans le forage ou la cimentation de puits ; dans la stimulation de puits d'hydrocarbures ; dans le traitement de l'eau en circuit ouvert, en circuit fermé ou en circuit semi fermé ; dans le traitement des mouts de fermentation ; dans le traitement des boues ; dans la construction ; dans la fabrication de papier ou de carton ; dans le domaine des batteries ; dans le traitement du bois ; dans le traitement de composition hydraulique ; dans l'industrie minière ; dans la formulation de produits cosmétiques ; dans la formulation de détergents ; dans la fabrication du textile ; dans la géothermie ; dans la fabrication de couche hygiénique ; ou dans l'agriculture.

15. Utilisation d'un polymère selon la revendication 13 comme floculant, coagulant, agent liant, agent fixateur, agent réducteur de viscosité, agent épaississant, agent absorbant, agent réducteur de friction, agent d'égouttage, agent de rétention de charge, agent de déshydratation, agent conditionneur, agent stabilisant, agent filmogène, agent d'encollage, agent superplastifiant, inhibiteur d'argile ou dispersant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2023078534 A
- DE 102022200882
- JP 2000038595 A


### Non-patent literature cited in the description


- **LENA et al.** *Macromolecules*, 12 May 2020, vol. 53, 3994-4011
- **PLUMMER et al.** *ACS Applied Polymer Materials*, 02 June 2021, vol. 3, 3264-3271
- **BINGHAM et al.** *ACS Applied Polymer Materials*, 14 August 2020, vol. 2, 3440-3449